# EUROPEAN PATENT SPECIFICATION

(11) **EP 3 969 345 B1**
(45) Date of publication and mention of the grant of the patent: **28.12.2022**
(21) Application number: 19724447.8
(22) Date of filing: 14.05.2019
(51) Int. Cl.: B60W 40/08, B60W 50/08, G05D 1/00

(54) **A METHOD FOR ENABLING AN AUTONOMOUS DRIVING MODE FOR A MIXED-MODE VEHICLE**
VERFAHREN ZUM ERMÖGLICHEN EINES AUTONOMEN FAHRMODUS FÜR EIN MISCHMODUSFAHRZEUG
PROCÉDÉ D'ACTIVATION D'UN MODE DE CONDUITE AUTONOME POUR UN VÉHICULE À MODE MIXTE

(43) Date of publication of application: 23.03.2022
(73) Proprietor: VOLVO TRUCK CORPORATION, 405 08 Göteborg (SE)
(72) Inventor: ESBERG, Ida, 415 01 Göteborg (SE); MOBERG, Max, 417 03 Göteborg (SE)
(74) Representative: Valea AB
(86) International application number: PCT/EP2019/062272
(87) International publication number: WO 2020/228942

(56) References cited:
- US-A1- 2018 126 992
- US-A1- 2018 345 954
- US-B1- 9 581 997

## Description

### TECHNICAL FIELD

The invention relates to a method for enabling an autonomous driving mode for a mixed-mode vehicle which is configured to switch between a manual driving mode and an autonomous driving mode. The invention further relates to a control unit for a mixed-mode vehicle which is configured to switch between a manual driving mode and an autonomous driving mode, to a mixed-mode vehicle configured to switch between a manual driving mode and an autonomous driving mode, to a computer program and/or to a computer readable medium carrying a computer program.

The invention can be applied in heavy-duty vehicles, such as trucks, buses and construction equipment. Although the invention will be described with respect to heavy-duty trucks, the invention is not restricted to this particular vehicle, but may also be used in other vehicles such as light-weight trucks, buses, articulated haulers, excavators, wheel loaders, and backhoe loaders.

### BACKGROUND

Autonomous vehicle technology which concerns autonomous driving capabilities of autonomous vehicles is an area which has been evolving rapidly during recent years. It is likely that it will become increasingly common to see autonomous vehicles driving on public roads. It is also likely that it will be more common that commercial vehicles, such as trucks, buses, construction equipment vehicles etc. will have autonomous driving capabilities, which are adapted for public roads and/or for restricted areas.

One particular area of autonomous vehicles concerns so called mixed-mode or dual mode vehicles which are capable of switching between manual and autonomous driving modes. Such vehicles may for example be manually driven by a driver when driving on public road sections and autonomously driven when operated in confined or preselected areas, such as harbour areas, logistics centers, parking areas, construction sites etc.

One example of a mixed-mode, or dual mode, vehicle may be found in US 2014/0018992 A1 which discloses a system for transitioning a mixed-mode autonomous vehicle from human-drive mode to an autonomous-drive mode. The mixed-mode autonomous vehicle system has an autonomous vehicle, a landing strip, and a reference indicator. The autonomous vehicle is equipped with a landing sensor to detect the landing strip, and a reference sensor configured to detect the reference indicator. When a human driver stops the vehicle on the landing strip, the vehicle can start the transition to autonomous drive mode. The landing sensor in the vehicle detects the landing strip and responsively detects the reference indicator.

An other example is known from US2018/345954 A1 which describes a method for autonomously parking a motor vehicle with interior monitoring.

Although there are known systems for enabling an autonomous driving mode of a mixed-mode vehicle, it has been realized that there is room for improvement.

### SUMMARY

In view of the above, an object of the invention is to provide an improved method for enabling an autonomous driving mode for a mixed-mode vehicle, which results in a safe and controlled transition between the different modes. Furthermore, an object of the invention is to provide an improved control unit for a mixed-mode vehicle, an improved mixed-mode vehicle, an improved computer program and/or an improved computer readable medium carrying a computer program.

According to a first aspect, the object is achieved by a method for enabling an autonomous driving mode for a mixed-mode vehicle according to claim 1. According to a second aspect, the object is achieved by a control unit according to claim 7.

According to a third aspect, the object is achieved by a mixed-mode vehicle according to claim 8.

According to a fourth aspect, the object is achieved by a computer program according to claim 9.

According to a fifth aspect, the object is achieved by a computer readable medium carrying a computer program according to claim 10.

According to the first aspect thereof, the object is achieved by a method for enabling an autonomous driving mode for a mixed-mode vehicle configured to switch between a manual driving mode and an autonomous driving mode, the method comprising:
- determining if a geographical position of the vehicle is within a predetermined launch area, wherein the method further comprises:
- determining if a vehicle user is present aboard the vehicle or not, and
- enabling the autonomous driving mode when at least the two following conditions are determined: the geographical position of the vehicle is within the predetermined launch area and a vehicle user is not present aboard the vehicle.

By the provision of the method as disclosed herein, enabling an autonomous driving mode for a mixed-mode vehicle can be performed in a more efficient, controlled and safer manner. In fact, the present invention is based on the realization by the inventors that it is beneficial to determine that a vehicle user is not present aboard the vehicle before enabling the autonomous mode of the mixed-mode vehicle. More particularly, the present invention is based on the realization that at least two conditions should be fulfilled to efficiently and safely enable the autonomous driving mode. The at least two conditions that should be fulfilled are: 1) the vehicle shall be located within a predefined launch area, and 2) a vehicle user shall not be present aboard the vehicle.

These two conditions have been found to be beneficial to determine especially when the vehicle is intended to operate in manual mode in a confined area, such as a logistics center, a harbour area, a construction site etc, and in autonomous mode in a public road network. For example, the vehicle user may be a driver that works at the confined area, and in order to not reduce productivity, it may be advantageous to determine that the driver is not present aboard the vehicle before it starts conducting an autonomous driving mission. Rather, the driver can leave the vehicle at the predetermined launch area and may thereafter perform other tasks, such as driving other vehicles, when the vehicle is conducting the autonomous driving mission. Thereby, more efficient and productive work may be carried out at the site.

Moreover, by at least determining the two conditions as mentioned in the above before enabling the autonomous driving mode, safety may also be improved. In fact, some autonomous vehicle missions may be such that it is unsafe and/or unsuitable for a user to be present when it is conducted. Purely by way of example, an autonomous driving mission which may be unsafe for a vehicle user is if the vehicle is conducting the mission on a section where the roll-over risk is significant. As another example of an unsafe mission, the vehicle may conduct autonomous driving missions in areas having low oxygen content. In addition, by enabling the autonomous driving mode when the vehicle also is located within a predetermined launch area, a more controlled, and thereby safer, transition may be performed. Thus, by determining the at least two conditions before enabling the autonomous driving mode, safer operation of the vehicle may be conducted since the risk of personal injuries may be reduced.

The expression "*predetermined launch area*" as used herein may be defined as an area for the vehicle where the vehicle can enable the autonomous driving mode. The area may be defined by recognizable visual markers and/or by virtual markers, such as by geographical coordinates.

The expression "*a vehicle user is present aboard the vehicle*" as used herein means when a vehicle user, such as a driver, is located on or in the vehicle, such as when a vehicle user is located inside a vehicle cabin or the like.

The expression "*autonomous driving mode*" as used herein means a mode of the mixed-mode vehicle when an autonomous driving system thereof is enabled for autonomously performing at least one of steering, braking and propulsion control of the vehicle without any direct human involvement. Typically, when the autonomous driving mode is enabled, autonomous driving control means of the autonomous driving system are activated or ready to be activated. Autonomous driving control means may be one or more control units of the vehicle which are configured to control steering actuators, braking actuators and also propulsion means.

The expression "*manual driving mode*" as used herein means a mode of the mixed-mode vehicle when a vehicle user, in this case a driver, may manually perform at least one of steering, braking and propulsion control of the vehicle. Typically, when the manual driving mode is enabled, autonomous driving control means of the mixed-mode vehicle may be inactive.

The expression "*vehicle user*" as used herein means a user of the vehicle which may be aboard the vehicle, such as a driver and/or one or more passengers.

Optionally, the determination of whether a vehicle user is present aboard the vehicle or not may be performed by identifying if a vehicle door is unlocked or locked. Hence, by determining if one or more vehicle doors of the mixed-mode vehicle are unlocked or locked, it may be established if a vehicle user is aboard the vehicle or not. Preferably, if it is determined that the vehicle door is locked it is assumed that a vehicle user is not aboard the vehicle and if it is determined that the vehicle door is unlocked it is assumed that a vehicle user is present aboard the vehicle. Purely by way of example, the one or more vehicle doors may be vehicle doors for accessing a driver cabin of the mixed-mode vehicle. Determining if one or more vehicle doors are unlocked/locked has shown to be a simple and efficient way of establishing whether a vehicle user is present aboard the vehicle or not.

Optionally, the determination of whether a vehicle user is present aboard the vehicle or not may be performed by a vehicle sensor which is adapted to identify if a vehicle user is present inside the vehicle or not, such as any one of a movement identification sensor and a vehicle alarm sensor. Using such a vehicle sensor may further improve the reliability of the determination of whether a vehicle user is still present aboard the mixed-mode vehicle or not, or it may be used without any other vehicle user presence determination means. Purely by way of example, the vehicle sensor may be provided for identifying if a vehicle user is present inside a driver cabin of the mixed-mode vehicle. Optionally, the determination of whether a vehicle user is present aboard the vehicle or not may be performed by a vehicle seat sensor provided in a vehicle seat of the vehicle, which vehicle seat sensor is adapted to identify if a vehicle user is sitting in the vehicle seat or not, such as a seat weight sensor. Purely by way of example, one or more vehicles seat sensors may be provided in each one of one or more vehicle seats of a driver cabin of the mixed-mode vehicle. Preferably, the vehicle seat sensor is at least a provided in a driver seat of the vehicle. Determining if a vehicle user is present aboard the mixed-mode vehicle or not by use of vehicle seat sensors has shown to be an efficient and reliable way to perform the determination, either as a complement to other vehicle user presence determination means or even as the only vehicle user presence determination means.

Also according to the first aspect of the invention, the method further comprises:
- receiving a signal indicative of an autonomous driving mission, and
- initiating the autonomous driving mission when also the autonomous driving mode is enabled.

Thereby, the autonomous driving mission is initiated in an efficient and safe manner, without the risk that a vehicle user is present aboard the vehicle, or at least not present in a driver cabin of the mixed-mode vehicle. The signal indicative of an autonomous driving mission may for example be received from a back-office central or the like. Purely by way of example, the signal may be received by wireless communication means, such as WiFi^{™}, Bluetooth^{®}, 3g, 4g, 5g, or by any other equivalent wireless communication means.

Also according to the first aspect of the invention, the method further comprises:
- determining if a load is connected to the vehicle and/or provided on the vehicle in accordance with a condition given by the autonomous driving mission, and
- initiating the autonomous driving mission when it is also determined that the load is connected to the vehicle and/or provided on the vehicle.

Thereby, the autonomous driving mission is initiated in an efficient manner without the risk of starting the mission when the load has not yet been connected to the vehicle and/or provided on the vehicle. The expression "load" typically means a load which the mixed-mode vehicle is configured to transport, such as bulk cargo, including but not limited to sand, gravel, earth, asphalt etc., one or more loaded and/or unloaded pallets, one or more boxes. Further, the load may also be in the form of a trailer connected to the vehicle. Still further, "*load*" may in some embodiments also mean passengers, which are located in a passenger space of the mixed-mode vehicle. For example, in such situation, the mixed-mode vehicle is preferably a bus or a taxi vehicle.

Optionally, the method may further comprise:
- determining an ambient weather condition of the vehicle, and
- initiating the autonomous driving mission when it has also been determined that the ambient weather condition is within an allowable predetermined ambient weather condition range.

It has namely been realized that there may be ambient weather conditions when it is not suitable to initiate the autonomous driving mission. For example, the functioning of external perception sensors for the mixed-mode vehicle's autonomous driving system may be temporarily impaired during specific weather conditions. Examples of such weather conditions may be when it is snowing heavily, when there is fog, when it is raining heavily etc. Thereby, by also considering ambient weather conditions before initiating the autonomous driving mission, safer and more reliable operation of the mixed-mode vehicle may be provided.

Optionally, the step of determining if a vehicle user is present aboard the vehicle or not may comprise determining if the vehicle user is present in a predefined space of the vehicle or not, such as a driver cabin. Thereby, by determining if a vehicle user is present in a predefined space of the vehicle, other spaces of the mixed-mode vehicle may not be considered, such as a passenger space of a bus.

According to the second aspect thereof, the object is achieved by a control unit for a mixed-mode vehicle configured to switch between a manual driving mode and an autonomous driving mode, wherein the control unit is configured to perform the steps of the method according to any one of the embodiments of the first aspect of the invention.

Advantages and effects provided by the second aspect of the invention are largely analogous to the advantages and effects provided by the method according to the embodiments of the first aspect of the invention. It shall also be noted that all embodiments of the second aspect of the invention are applicable to and combinable with all embodiments of the first aspect of the invention and vice versa.

According to the third aspect thereof, the object is achieved by a mixed-mode vehicle configured to switch between a manual driving mode and an autonomous driving mode, wherein the mixed-mode vehicle comprises a control unit according to any one of the embodiments of the second aspect of the invention.

Advantages and effects provided by the third aspect of the invention are largely analogous to the advantages and effects provided by the method and control unit according to the embodiments of the first and second aspects of the invention. It shall also be noted that all embodiments of the third aspect of the invention are applicable to and combinable with all embodiments of the first and second aspects of the invention and vice versa.

Optionally, the mixed-mode vehicle may be any one of a truck, such as a heavy-duty or light weight truck, a bus, a construction equipment vehicle or the like. Still optionally, the mixed-mode vehicle may be a passenger car.

According to the fourth aspect thereof, the object is achieved by a computer program comprising program code means for performing the steps of any of the embodiments of the first aspect of the invention, when said program is run on a computer.

According to the fifth aspect thereof, the object is achieved by a computer readable medium carrying a computer program comprising program code means for performing the steps of any of the embodiments of the first aspect of the invention, when said program product is run on a computer.

Advantages and effects provided by the fourth and fifth aspects of the invention are largely analogous to the advantages and effects provided by the method, control unit and mixed-mode vehicle according to the embodiments of the first, second and third aspects of the invention. It shall also be noted that all embodiments of the fourth and fifth aspects of the invention are applicable to and combinable with all embodiments of the first, second and third aspects of the invention and vice versa.

### BRIEF DESCRIPTION OF THE DRAWINGS

With reference to the appended drawings, below follows a more detailed description of embodiments of the invention cited as examples.

In the drawings:
Fig. 1 shows a mixed-mode vehicle in the form of a heavy-duty truck according to an example embodiment of the present invention;
Fig. 2 shows a flowchart of a method according to an example embodiment of the present invention; and
Fig. 3 shows a schematic view of a mixed-mode vehicle operating in a confined area according to an example embodiment of the present invention;
Fig. 4 shows a schematic view of a mixed-mode vehicle according to an example embodiment of the present invention;
Fig. 5 shows another flowchart of a method according to an example embodiment of the present invention.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION OF EXAMPLE EMBODIMENTS OF THE INVENTION

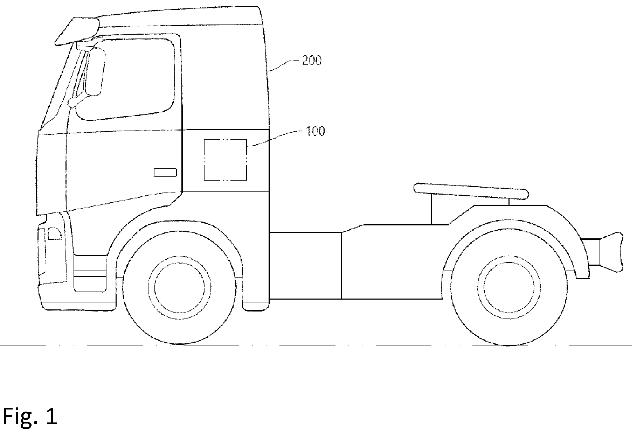

Fig. 1 shows a heavy-duty truck 200 which is a mixed-mode vehicle configured to switch between a manual driving mode and an autonomous driving mode according to an example embodiment of the present invention. The truck 200 is here in the form of a towing truck adapted for towing one or more trailers (not shown). It shall however be noted that the present invention is not restricted to this type of vehicle, but may also be used for other types of vehicles, such as buses, construction equipment vehicles etc.

The mixed-mode vehicle 200 comprises a control unit 100. The control unit 100 is configured to perform the steps of the method according to the present invention, which will be further described in the below.

The control unit 100 may include a microprocessor, microcontroller, programmable digital signal processor or another programmable device. The control unit 100 may also, or instead, include an application specific integrated circuit, a programmable gate array or programmable array logic, a programmable logic device, or a digital signal processor. Where the control unit 100 includes a programmable device such as the microprocessor, microcontroller or programmable digital signal processor mentioned above, the processor may further include computer executable code that controls operation of the programmable device. The control unit 100 may comprise embedded hardware, sometimes with integrated software, where the hardware show close physical relationship. Examples of physical relationships are: shared casing and components mounted on one or several circuit boards. It shall be noted that the control unit 100 may be formed by one or more connected sub control units, or equivalent computer resources.

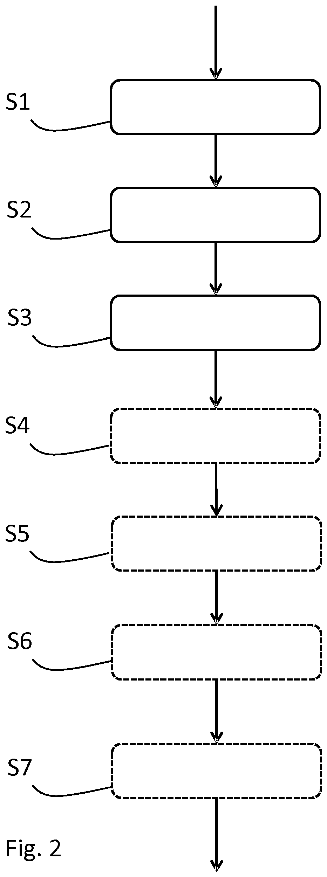

In fig. 2, a flowchart of a method according to an example embodiment of the present invention is shown. The flowchart comprises a sequence of steps S1-S7, whereby the steps S4-S7 are optional steps, which is indicated by boxes with dashed lines. It shall be noted that the steps does not necessarily need to be executed in the order as shown in fig. 2, but could likewise be executed in any other order, or even simultaneously with other steps.

The method is provided for enabling an autonomous driving mode for the mixed-mode vehicle 200 which is configured to switch between the manual driving mode and the autonomous driving mode. The method comprises the following steps:
S1 - determining if a geographical position of the vehicle 200 is within a predetermined launch area LA,
S2 - determining if a vehicle user is present aboard the vehicle 200 or not, and
S3 - enabling the autonomous driving mode when at least the two following conditions are determined: the geographical position of the vehicle 200 is within the predetermined launch area LA and a vehicle user is not present aboard the vehicle 200.

The determination of the geographical position of the vehicle 200 may be determined by one or more geographical position determination means (not shown), such as by a GNSS (Global Navigation Satellite System) mounted on the vehicle 200. This may for example be GPS (Global Positioning system), GLONASS, Galileo or any other equivalent system. Still further, as a complement or as an alternative, the geographical position of the vehicle 200 may be determined also by other geographical position determination means, such as by use of a camera system or the like which can identify that the vehicle 200 is located at the predetermined launch area LA. Examples of other geographical position determination means may be to make use of a barcode reader, or any other type of reader, to identify that the vehicle 200 is at the predetermined launch area LA by e.g. scanning a barcode which is located at the predetermined launch area LA.

The step S2 of determining if a vehicle user is present aboard the vehicle 200 or not may be done by one or more vehicle user presence determination means as described herein, such as means for determining if the vehicle doors are unlocked or locked, vehicle seat sensors, movement identification sensors, or any other means which are configured to identify if a vehicle user is aboard the vehicle 200 or not.

In the embodiment shown in fig. 1, the vehicle user presence determination means used are means for determining if the vehicle doors are unlocked or locked, and also an alarm sensor which is configured to identify if a vehicle user is located inside the driver cabin. Hence, the expression "a *vehicle user is present aboard the vehicle*" means in this context that a vehicle user is located inside the driver cabin.

As an alternative example, the mixed-mode vehicle may be a bus (not shown), whereby the step S2 may determine if a vehicle user in the form of a driver is present aboard the vehicle or not. Hence, the bus may still be able to switch to the autonomous driving mode when passengers are present aboard the vehicle. Purely by way of example, a bus at an airport area may be used to autonomously drive passengers from one location to another, and also configured to switch between the autonomous mode and a manual driving mode where a driver is in control of the driving. As such, the step S2 of determining if a vehicle user is present aboard the vehicle or not will comprises determining if the vehicle user is present in a predefined space of the vehicle or not, such as a driver cabin of the bus.

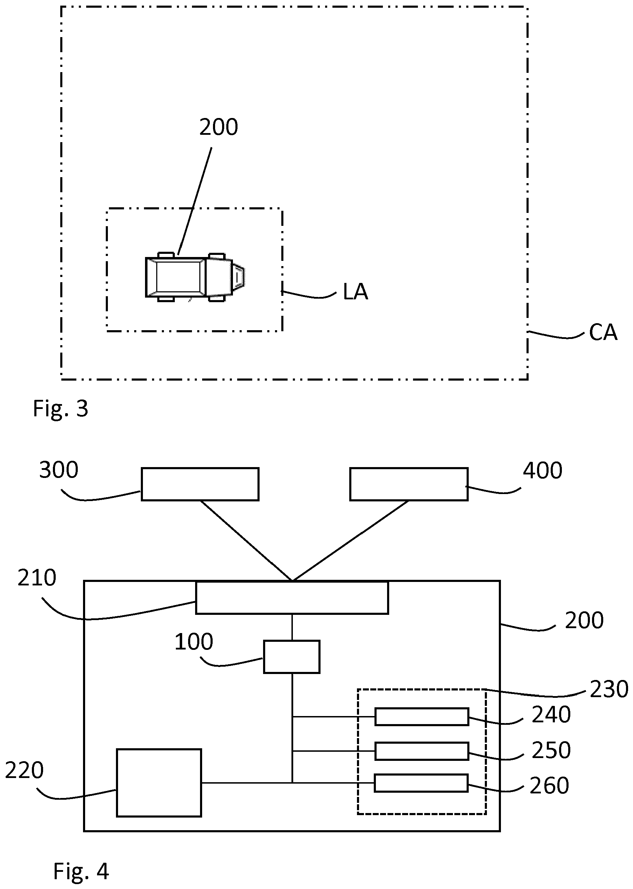

The method further comprises a step S4 of receiving a signal indicative of an autonomous driving mission. The signal may for example be received by wireless communication means provided on the vehicle 200, such as by a telematics unit 210 as shown in fig. 4.

As further shown in fig. 2, the method further comprises a step S5 of determining if a load is connected to the vehicle and/or provided on the vehicle in accordance with a condition given by the autonomous driving mission. In the case of the towing vehicle 200 as shown in fig. 1, the load connected to the vehicle preferably means that a trailer (not shown) has been connected to the vehicle 200. This may e.g. be determined by sensors (not shown) on the vehicle 200 which are configured to identify when a trailer has been connected. Further, in such a case, the vehicle 200 may in some embodiments be able to determine the identity of the trailer, whereby the identity is controlled with respect to the condition given by the autonomous driving mission, i.e. controlling if the "right" trailer has been connected or not. Still further, according to an example embodiment, the weight of the trailer may be determined to control if it has been loaded according the predetermined condition given by the autonomous driving mission. As a complement or as an alternative, it may also be determined if a load is provided on the vehicle, such as pallets, boxes, sand, gravel etc, or even passengers. As an example, one or more weight sensors provided on the vehicle or on a weight measuring station (not shown) at the predetermined launch area LA may be used for determining if the load has been provided on the vehicle or not.

The method may further comprise a step S6 of determining an ambient weather condition of the vehicle, as shown in fig 2. As already explained in the above, an ambient weather condition may be unsuitable for autonomous driving, such as when external perception sensors, e.g. cameras, LIDAR (light imaging, detection and ranging), RADAR (radio detection and ranging) or the like, are not functioning correctly due to the ambient weather condition.

Further, the method comprises a step S7 of initiating the autonomous driving mission when the autonomous driving mode is enabled and when the signal indicative of the autonomous driving mission has been received, and further when it has also been determined that the load is connected to the vehicle and/or provided on the vehicle and optionally

when the ambient weather condition is within an allowable predetermined ambient weather condition range.

The method may as a complement, or as an alternative, comprise determining if one or more external perception sensors of the vehicle are functioning correctly for performing autonomous driving. For example, the external perception sensors may be tested before initiating the autonomous driving mission. If the external perception sensors fail the test, the autonomous driving mission may not be initiated. Still further, the result of the test may be communicated to a back office central 400 or the like for informing that something has failed.

Further, as an alternative or as a complement, the method may further comprise a step of controlling the autonomous driving mission according to a predefined operational design domain (ODD) condition. The ODD condition may include any one of the following parameters: geographic predefined area, type of roadway, environmental condition(s) and speed limitation(s). If any of the ODD conditions exceeded/not followed during the autonomous driving mission, the mission may be interrupted and/or a warning signal may be sent to the back-office central 400.

The mixed-mode vehicle 200 may be operating within a confined area CA as schematically shown in fig. 3. Within the confined area is a predetermined launch area LA. The vehicle 200 may be enabled for autonomous driving, i.e. the autonomous driving mode may be enabled, once it is located in the predetermined launch area LA, and also when the other condition(s) according to the present invention is/are fulfilled. The confined area CA may be defined by virtual and/or by physical markers. The predetermined launch area LA may also be defined by virtual and/or by physical markers as already explained in the above. The confined area CA may e.g. be a logistics center, an airport, a harbour, a construction site or the like. The vehicle 200 may for example be the towing vehicle as shown in fig. 1 which can be manually driven, i.e. operating in a manual driving mode, to e.g. a logistics center and parked at a predetermined launch area. Thereafter, once it is determined that the driver has left the towing truck 200, an autonomous driving mode may be enabled, whereby the towing truck 200 can initiate an autonomous driving mission inside the logistics center. Alternatively, the vehicle 1 may be configured to operate in manual mode in the confined area CA and in autonomous mode when e.g. it is driving in a public road network. Hence, by the present invention it can be assured that a vehicle user is not present aboard the vehicle 1 when it is conducting an autonomous driving mission in the public road network. The vehicle 1 may for example be loaded, filled with fuel and/or electrically charged when in the confined area CA and when in a manual mode.

Fig. 4 shows a schematic view of a mixed-mode vehicle 200 according to an embodiment of the present invention. The vehicle 200 comprises a control unit 100 as already described in the above. The control unit is connected to a telematics unit 210 of the vehicle, which is configured to wirelessly transmit and/or receive signals to and from the vehicle 200. The control unit 100 is further connected to an autonomous driving system 220 of the vehicle 200. The autonomous driving system 220 preferably comprises one or more control units for executing longitudinal and/or lateral control commands to one or more steering and braking actuators and to propulsion means, such as an electric motor and/or an internal combustion engine.

The control unit 100 is also connected to at least one or more autonomous driving mode enabler units 230, indicated by dashed lines. The one or more autonomous driving mode enabler units 230 may be in the form of GNSS 240, an alarm sensor 250 of the vehicle 200 and a locking system 260 for vehicle doors of the vehicle 200.

The telematics unit 210 may be configured to wirelessly communicate with a nomadic locking device 300 and/or with a back office central 400. The nomadic locking device 300 may be in the form of a key fob, a smartphone or any other means which can remotely unlock and lock a vehicle door. Preferably, the determination that a vehicle user is not present aboard the vehicle is done when a vehicle door of the vehicle has been locked by the nomadic locking device 300. Hence, it can be assumed that no-one is inside the vehicle when a vehicle user has locked the vehicle door from a remote location with respect to the vehicle. Of course, to be absolutely certain that no-one is still in the vehicle, or at least not in the driver cabin, the other vehicle user presence determination means as described herein may also be used. The locking by use of the nomadic locking device 300 by the vehicle user may also be used as a manual confirmation means which confirms that the vehicle user accepts that the vehicle 1 can be enabled for autonomous driving. The back-office central 400 may be a central which is operating and managing the confined area CA as shown in fig. 3. The back-office central 400 may be operating and managing a plurality of mixed-mode vehicles and/or one or more confined areas.

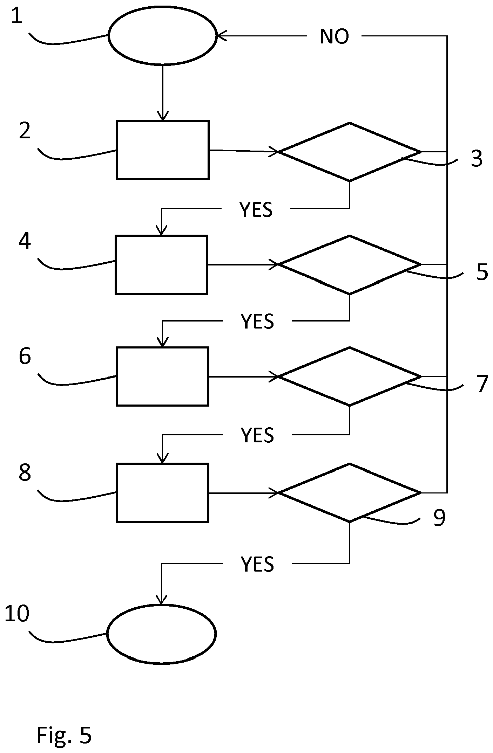

With respect to fig. 5, a flowchart of a method for enabling an autonomous driving mode and initiating an autonomous driving mission for a mixed-mode vehicle 200 is shown. The flowchart starts at 1 where the autonomous driving mode is turned OFF, i.e. it is not enabled. As a next step, 2, the geographical position of the vehicle 200 is determined. As a next step, 3, it is determined if the vehicle 200 is within a predetermined launch area LA. If YES, then the method is continued to step 4. If NO, then the method is started over again at 1. In step 4, door lock status of one or more vehicle doors of the vehicle 200 is assessed. As a next step, 5, it is determined if the one or more doors are locked. If YES, then the method is continued to step 5. If NO, then then the method is started over again at 1. In step 6, it is determined if a vehicle user is present inside the vehicle 200 or not, e.g. inside a vehicle cabin or not. As a next step, 7, it is determined if the vehicle 200 is empty. If YES, then the method is continued to step 8. If NO, then then the method is started over again at 1. In step 8, it is determined if a signal has been received which is indicative of an autonomous driving mission. If NO, then then the method is started over again at 1. If YES, then the autonomous driving mode is enabled and the autonomous driving mission is initiated at step 10.

It is to be understood that the present invention is not limited to the embodiments described above and illustrated in the drawings; rather, the skilled person will recognize that many changes and modifications may be made within the scope of the appended claims.

## Claims

1. A method for enabling an autonomous driving mode for a mixed-mode vehicle (200) configured to switch between a manual driving mode and an autonomous driving mode, the method comprising:
- (S1) determining if a geographical position of the vehicle is within a predetermined launch area (LA),
- (S2) determining if a vehicle user is present aboard the vehicle or not,
- (S3) enabling the autonomous driving mode when at least the two following conditions are determined: the geographical position of the vehicle is within the predetermined launch area and a vehicle user is not present aboard the vehicle, wherein the method further comprises:
- (S4) receiving a signal indicative of an autonomous driving mission,
- (S7) initiating the autonomous driving mission when also the autonomous driving mode is enabled, **characterized in that** the method further comprises:
- (S5) determining if a load is connected to the vehicle and/or provided on the vehicle in accordance with a condition given by the autonomous driving mission, and
- (S7) initiating the autonomous driving mission when it is also determined that the load is connected to the vehicle and/or provided on the vehicle.

2. The method according to any one of the preceding claims, wherein the determination of whether a vehicle user is present aboard the vehicle or not is performed by identifying if a vehicle door is unlocked or locked.

3. The method according to any one of the preceding claims, wherein the determination of whether a vehicle user is present aboard the vehicle or not is performed by a vehicle sensor which is adapted to identify if a vehicle user is present inside the vehicle or not, such as any one of a movement identification sensor and a vehicle alarm sensor (250).

4. The method according to any one of the preceding claims, wherein the determination of whether a vehicle user is present aboard the vehicle or not is performed by a vehicle seat sensor provided in a vehicle seat of the vehicle, which vehicle seat sensor is adapted to identify if a vehicle user is sitting in the vehicle seat or not, such as a seat weight sensor.

5. The method according to any one of the preceding claims, further comprising:
- (S6) determining an ambient weather condition of the vehicle, and
- (S7) initiating the autonomous driving mission when it has also been determined that the ambient weather condition is within an allowable predetermined ambient weather condition range.

6. The method according to any one of the preceding claims, wherein the step of determining if a vehicle user is present aboard the vehicle or not comprises determining if the vehicle user is present in a predefined space of the vehicle or not, such as a driver cabin.

7. A control unit (100) for a mixed-mode vehicle configured to switch between a manual driving mode and an autonomous driving mode, the control unit being configured to perform the steps of the method according to any one of claims 1-6.

8. A mixed-mode vehicle (200) configured to switch between a manual driving mode and an autonomous driving mode, wherein the mixed-mode vehicle comprises a control unit according to claim 7.

9. A computer program comprising program code means for performing the steps of any of claims 1-6, when said program is run on a computer.

10. A computer readable medium carrying a computer program comprising program code means for performing the steps of any of claims 1-6, when said program product is run on a computer.

## Patentansprüche

1. Verfahren zum Aktivieren eines autonomen Fahrmodus für ein Mischmodusfahrzeug (200), das konfiguriert ist, um zwischen einem manuellen Fahrmodus und einem autonomen Fahrmodus umzuschalten, das Verfahren umfassend:
- (S1) Bestimmen, ob eine geografische Position des Fahrzeugs innerhalb eines vorgegebenen Startgebiets (launch area - LA) liegt,
- (S2) Bestimmen, ob ein Fahrzeugbenutzer an Bord des Fahrzeugs anwesend ist oder nicht,
- (S3) Aktivieren des autonomen Fahrmodus, wenn mindestens die zwei folgenden Bedingungen bestimmt werden: die geografische Position des Fahrzeugs ist innerhalb des vorgegebenen Startgebiets und ein Fahrzeugbenutzer ist nicht anwesend an Bord des Fahrzeugs, wobei das Verfahren ferner umfasst:
- (S4) Empfangen eines Signals, das eine autonome Fahrmission anzeigt,
- (S7) Einleiten der autonomen Fahrmission, wenn der autonome Fahrmodus ebenso aktiviert ist, **dadurch gekennzeichnet, dass** das Verfahren ferner umfasst:
- (S5) Bestimmen, ob eine Last mit dem Fahrzeug verbunden und/oder an dem Fahrzeug bereitgestellt ist, gemäß einer Bedingung, die durch die autonome Fahrmission gegeben ist, und
- (S7) Einleiten der autonomen Fahrmission, wenn ebenso bestimmt wird, dass die Last mit dem Fahrzeug verbunden und/oder an dem Fahrzeug bereitgestellt ist.

2. Verfahren nach einem der vorstehenden Ansprüche, wobei die Bestimmung, ob ein Fahrzeugbenutzer an Bord des Fahrzeugs anwesend ist oder nicht, durchgeführt wird durch ein Erkennen, ob eine Fahrzeugtür entriegelt oder verriegelt ist.

3. Verfahren nach einem der vorstehenden Ansprüche, wobei die Bestimmung, ob ein Fahrzeugbenutzer an Bord des Fahrzeugs anwesend ist oder nicht, durch einen Fahrzeugsensor, der angepasst ist, um zu erkennen, ob ein Fahrzeugbenutzer in dem Fahrzeug anwesend ist oder nicht, wie etwa einen beliebigen von einem Bewegungserkennungssensor und einem Fahrzeugalarmsensor (250), durchgeführt wird.

4. Verfahren nach einem der vorstehenden Ansprüche, wobei die Bestimmung, ob ein Fahrzeugbenutzer an Bord des Fahrzeugs anwesend ist oder nicht, durch einen Fahrzeugsitzsensor, der in einem Fahrzeugsitz des Fahrzeugs bereitgestellt ist, wobei der Fahrzeugsitzsensor angepasst ist, um zu erkennen, ob ein Fahrzeugbenutzer in dem Fahrzeugsitz sitzt oder nicht, wie etwa einen Sitzgewichtssensor, durchgeführt wird.

5. Verfahren nach einem der vorstehenden Ansprüche, ferner umfassend:
- (S6) Bestimmen einer Umgebungswetterbedingung des Fahrzeugs und
- (S7) Einleiten der autonomen Fahrmission, wenn ebenso bestimmt wurde, dass die Umgebungswetterbedingung innerhalb eines zulässigen vorgegebenen Umgebungswetterbedingungsbereichs ist.

6. Verfahren nach einem der vorstehenden Ansprüche, wobei der Schritt des Bestimmens, ob ein Fahrzeugbenutzer an Bord des Fahrzeugs anwesend ist oder nicht, das Bestimmen, ob der Fahrzeugbenutzer in einem vordefinierten Raum des Fahrzeugs, wie etwa einer Fahrerkabine, anwesend ist oder nicht, umfasst.

7. Steuereinheit (100) für ein Mischmodusfahrzeug, die konfiguriert ist, um zwischen einem manuellen Fahrmodus und einem autonomen Fahrmodus umzuschalten, wobei die Steuereinheit konfiguriert ist, die Schritte des Verfahrens nach einem der Ansprüche 1 bis 6 durchzuführen.

8. Mischmodusfahrzeug (200), das konfiguriert ist, um zwischen einem manuellen Fahrmodus und einem autonomen Fahrmodus umzuschalten, wobei das Mischmodusfahrzeug eine Steuereinheit nach Anspruch 7 umfasst.

9. Computerprogramm, umfassend Programmcodemittel zum Durchführen der Schritte nach einem der Ansprüche 1 bis 6, wenn das Programm auf einem Computer ausgeführt wird.

10. Computerlesbares Medium, das ein Computerprogramm trägt, umfassend Programmcodemittel zum Durchführen der Schritte nach einem der Ansprüche 1 bis 6, wenn das Programmprodukt auf einem Computer ausgeführt wird.

## Revendications

1. Procédé d'activation d'un mode de conduite autonome pour un véhicule à mode mixte (200) configuré pour passer entre un mode de conduite manuel et un mode de conduite autonome, le procédé comprenant :
- (S1) la détermination du fait de savoir si une position géographique du véhicule se trouve dans les limites d'une zone de lancement prédéterminée (LA),
- (S2) la détermination du fait de savoir si un utilisateur du véhicule est présent ou non à bord du véhicule,
- (S3) l'activation du mode de conduite autonome lorsqu'au moins les deux conditions suivantes sont déterminées : la position géographique du véhicule se trouve dans les limites de la zone de lancement prédéterminée et un utilisateur du véhicule n'est pas présent à bord du véhicule, le procédé comprenant en outre :
- (S4) la réception d'un signal indiquant une mission de conduite autonome,
- (S7) la mise en oeuvre de la mission de conduite autonome lorsque le mode de conduite autonome est également activé, **caractérisé en ce que** le procédé comprend en outre :
- (S5) la détermination du fait de savoir si une charge est reliée au véhicule et/ou prévue sur le véhicule conformément à une condition donnée par la mission de conduite autonome, et
- (S7) la mise en oeuvre de la mission de conduite autonome lorsqu'il est également déterminé que la charge est reliée au véhicule et/ou prévue sur le véhicule.

2. Procédé selon l'une quelconque des revendications précédentes, la détermination du fait de savoir si un utilisateur du véhicule est présent ou non à bord du véhicule étant effectuée en identifiant si une porte du véhicule est déverrouillée ou verrouillée.

3. Procédé selon l'une quelconque des revendications précédentes, la détermination du fait de savoir si un utilisateur de véhicule est présent ou non à bord du véhicule étant effectuée par un capteur de véhicule qui est adapté pour identifier si un utilisateur de véhicule est présent ou non à l'intérieur du véhicule, tel que l'un quelconque parmi un capteur d'identification de mouvement et un capteur d'alarme de véhicule (250).

4. Procédé selon l'une quelconque des revendications précédentes, la détermination du fait de savoir si un utilisateur de véhicule est présent ou non à bord du véhicule étant effectuée par un capteur de siège de véhicule prévu dans un siège de véhicule du véhicule, lequel capteur de siège de véhicule est adapté pour identifier si un utilisateur du véhicule est assis ou non sur le siège du véhicule, tel qu'un capteur de poids du siège.

5. Procédé selon l'une quelconque des revendications précédentes, comprenant en outre :
- (S6) la détermination d'une condition climatique ambiante du véhicule, et
- (S7) la mise en œuvre de la mission de conduite autonome lorsqu'il a également été déterminé que les conditions climatiques ambiantes se trouvent dans les limites d'une plage de condition climatique ambiante prédéterminée autorisée.

6. Procédé selon l'une quelconque des revendications précédentes, l'étape de détermination du fait de savoir si un utilisateur du véhicule est présent à bord du véhicule ou non comprenant la détermination du fait de savoir si l'utilisateur du véhicule est présent ou non dans un espace prédéfini du véhicule, tel qu'une cabine de conducteur.

7. Unité de commande (100) pour un véhicule en mode mixte configurée pour passer entre un mode de conduite manuelle et un mode de conduite autonome, l'unité de commande étant configurée pour effectuer les étapes du procédé selon l'une quelconque des revendications 1 à 6.

8. Véhicule en mode mixte (200) configuré pour passer entre un mode de conduite manuelle et un mode de conduite autonome, le véhicule en mode mixte comprenant une unité de commande selon la revendication 7.

9. Programme informatique comprenant un moyen de code de programme permettant d'effectuer les étapes selon l'une quelconque des revendications 1 à 6, lorsque ledit programme est exécuté sur un ordinateur.

10. Support lisible par ordinateur portant un programme informatique comprenant un moyen de code de programme permettant d'effectuer les étapes selon l'une quelconque des revendications 1 à 6 lorsque ledit produit-programme est exécuté sur un ordinateur.
